# EUROPEAN PATENT APPLICATION

(11) **EP 4 782 980 A1**
(43) Date of publication of application: **29.07.2026**
(21) Application number: 24886107.2
(22) Date of filing: 22.10.2024
(51) Int. Cl.: G06F 3/0485, G06F 3/04842

(54) **METHOD AND DEVICE FOR DISPLAYING SCREEN ON BASIS OF USER INPUT**

(30) Priority: 03.11.2023 KR 20230151081; 18.12.2023 KR 20230184380
(71) Applicant: Samsung Electronics Co., Ltd., Suwon-si, Gyeonggi-do 16677 (KR)
(72) Inventor: OH, Jaemin, Suwon-si Gyeonggi-do 16677 (KR); OH, Deukkyu, Suwon-si Gyeonggi-do 16677 (KR); WOO, Kwangtaek, Suwon-si Gyeonggi-do 16677 (KR); KIM, Seonghun, Suwon-si Gyeonggi-do 16677 (KR); SO, Hyeonbin, Suwon-si Gyeonggi-do 16677 (KR); AN, Jinwan, Suwon-si Gyeonggi-do 16677 (KR)
(74) Representative: Gulde & Partner
(86) International application number: PCT/KR2024/016028
(87) International publication number: WO 2025/095432

(57) **Abstract**

This electronic device may comprise: a display; at least one processor including a processing circuit; and a memory including one or more storage media for storing instructions, wherein the instructions, when executed by the processor, cause the electronic device to: determine similarity between a first page and a second page while displaying at least a part of the first page and at least a part of the second page through windows individually corresponding thereto on the display; enable concurrent scroll between the first page and the second page on the basis of the similarity between the first page and the second page; and on the basis of obtaining a swipe input while the concurrent scroll is enabled, apply the obtained swipe input to the first page and the second page.

## Description

### TECHNICAL FIELD

Hereinafter, a method of displaying a screen based on a user input is provided.

### BACKGROUND ART

Various electronic devices, such as smartphones, tablet personal computers (PCs), portable multimedia players (PMPs), personal digital assistants (PDAs), laptop PCs, and wearable devices, have been widely used.

An electronic device may display pages stored in the electronic device on a display. However, due to the size limitation of the display, the entire stored page may not be displayed, and when the electronic device receives a user input to scroll a page, the electronic device may display another portion of the page.

### DISCLOSURE OF THE INVENTION

### TECHNICAL SOLUTIONS

An electronic device includes a display; a processor; and a memory storing instructions, wherein the instructions, when executed by the processor, cause the electronic device to, while displaying at least a portion of a first page and at least a portion of a second page on respectively corresponding windows on the display, determine a similarity between the first page and the second page, based on the similarity between the first page and the second page, enable concurrent scrolling between the first page and the second page, and while the concurrent scrolling is enabled, based on obtaining a swipe input, apply the obtained swipe input to the first page and the second page.

A method performed by an electronic device includes while displaying at least a portion of a first page and at least a portion of a second page on respectively corresponding windows on a display, determining a similarity between the first page and the second page; based on the similarity between the first page and the second page, enabling concurrent scrolling between the first page and the second page; and while the concurrent scrolling is enabled, based on obtaining a swipe input, applying the obtained swipe input to the first page and the second page.

### BRIEF DESCRIPTION OF DRAWINGS

FIG. 1 is a block diagram illustrating an electronic device in a network environment according to various embodiments.
FIG. 2 is a flowchart of an example of a method of displaying a plurality of pages by an electronic device according to various embodiments.
FIG. 3 is a diagram illustrating an example of an operation of applying concurrent scrolling to a plurality of pages by an electronic device according to various embodiments.
FIG. 4 is a diagram illustrating an example of a page, a plurality of contents, and a display area according to various embodiments.
FIG. 5A is a diagram illustrating an example of an operation of applying concurrent scrolling to a plurality of pages using a concurrent scrolling object by an electronic device according to various embodiments.
FIG. 5B is a diagram illustrating an example of an operation, by an electronic device, of applying concurrent scrolling to a plurality of pages using a displayed concurrent scrolling object when concurrent scrolling is enabled according to various embodiments.
FIG. 6 is a diagram illustrating an example of an operation of applying concurrent scrolling to a plurality of pages having different lengths by an electronic device according to various embodiments.
FIG. 7 is a diagram illustrating an example of an operation, by an electronic device, of switching between enable and disable via a graphic object indicating whether concurrent scrolling is enabled according to various embodiments.
FIG. 8 is a diagram illustrating an example of an operation of applying a magnification adjustment input to a plurality of pages by an electronic device according to various embodiments.

### MODE FOR CARRYING OUT THE INVENTION

Hereinafter, embodiments are described in detail with reference to the accompanying drawings. When describing the embodiments with reference to the accompanying drawings, like reference numerals refer to like elements and a repeated description related thereto is omitted.

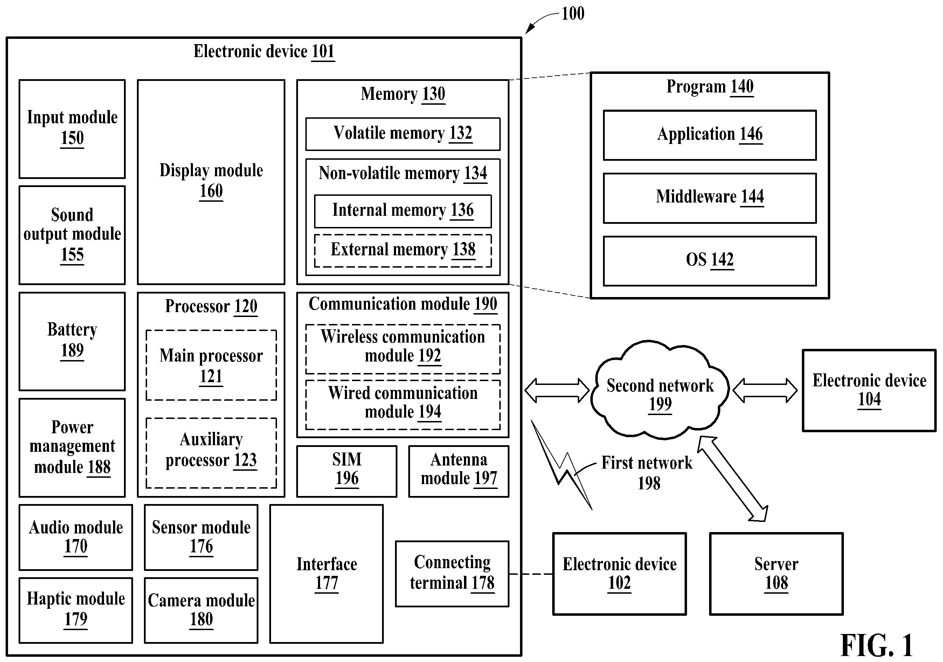

FIG. 1 is a block diagram illustrating an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or headphones) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic apparatus 101 and the external electronic apparatus 104 via the server 108 coupled with the second network 199. Each of the electronic devices 102 or 104 may be a device of a same type as, or a different type, from the electronic device 101. According to an embodiment, all or some of operations to be executed by the electronic device 101 may be executed by the external electronic devices 102 and 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

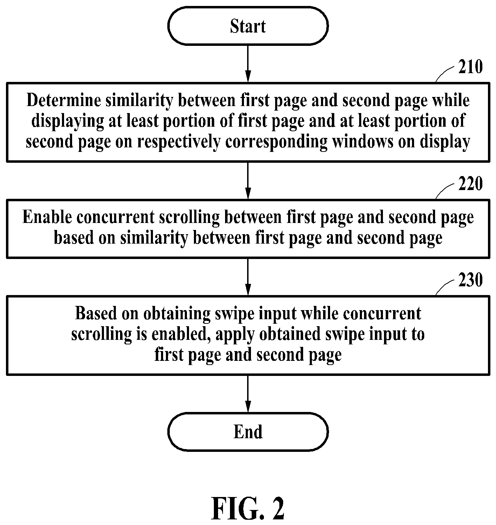

FIG. 2 is a flowchart of an example of a method of displaying a plurality of pages by an electronic device according to various embodiments.

An electronic device (e.g., the electronic device 101 of FIG. 1) according to an embodiment may display a plurality of pages and may apply an obtained user input (e.g., a swipe input) to at least one of the pages.

In operation 210, the electronic device may determine a similarity between a first page and a second page while displaying at least a portion of the first page and at least a portion of the second page on respectively corresponding windows.

According to an embodiment, the page may include a web page. The web page may be a wired and/or wireless Internet page and may be provided via an Internet protocol-based network (e.g., the network 199 or the server 108 of FIG. 1). The web page may have a uniform resource locator (URL) address to define an access path. For example, the web page may be implemented in the form of a hypertext markup language (HTML) document or an extensible markup language (XML) document. The web page may be a part of a website, which is a collection of interconnected web pages. For example, the electronic device may display at least a portion of the web page in response to obtaining a user input that specifies the web page.

According to an embodiment, the page may include a screen provided by an application (e.g., the application 146 of FIG. 1). For example, the page may correspond to a virtual space provided by the application. For example, the page may include a page corresponding to a chat room provided by a messaging application. For example, the page may include a page corresponding to a wish list provided by a shopping application. While executing the application, the electronic device may display at least a portion of the page corresponding to the virtual space in response to obtaining a user input with respect to the page corresponding to the virtual space provided by the application.

The page may include a plurality of contents. The content may include at least one of text, an image, a video, or an interfacing object. The interfacing object may be a component implemented to interact with a user, and may include, for example, a button or icon implemented to display another content and/or transition to another page in response to a user input.

The electronic device according to an embodiment may display a corresponding page on a window. Each window may correspond (e.g., one-to-one correspondence) to an individual page. When the electronic device simultaneously displays the first page and the second page, the electronic device may display the first page and the second page on a first window corresponding to the first page and a second window corresponding to the second page.

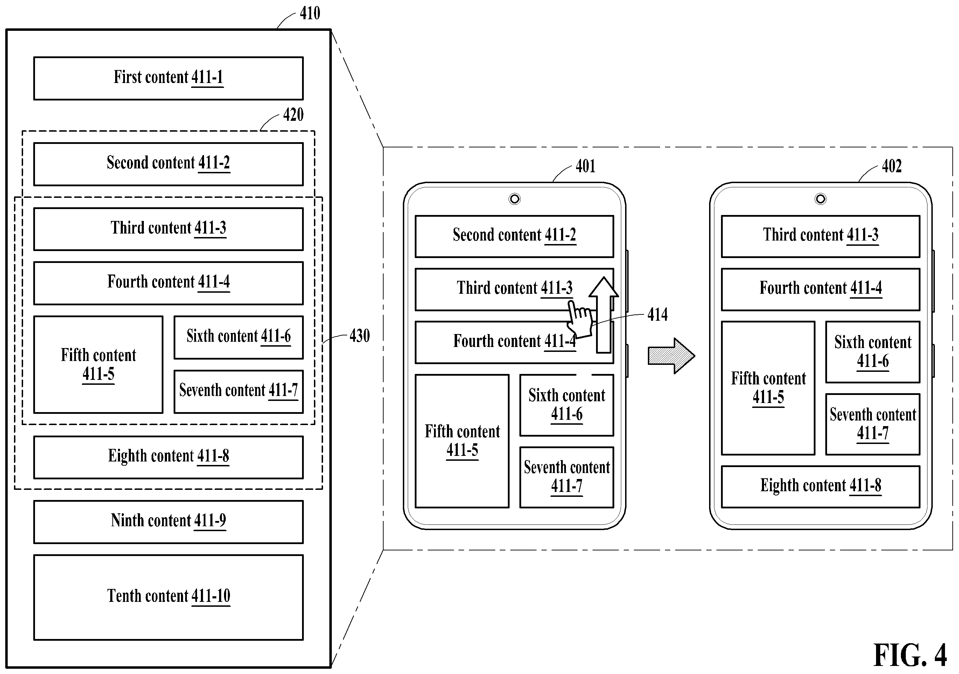

As described further with reference to FIG. 4, when the electronic device displays a page on a display, a portion of the page may be displayed, and an area of the page displayed on the display may be changed based on a user input. In the embodiments of the present disclosure, at least a partial area of a page displayed on the display may be referred to as a display area.

The electronic device according to an embodiment may determine a similarity between the first page and the second page.

The similarity between pages may include at least one of a similarity between contents included in the pages, a similarity between layouts of the contents, or a similarity between applications that provide the pages. The similarity between contents may include a visual similarity between contents included in a page, a similarity between substances, or a similarity between functions.

According to an embodiment, the electronic device may determine the similarity between pages, based on a similarity at a content level and a similarity at a layout level.

For example, the electronic device may obtain information about contents arranged in the first page and information about contents arranged in the second page. The information about the content may include one of an identifier (ID) of the content (e.g., a resource ID), a name, a position (e.g., coordinates), a size, a type of the content (e.g., a text type, an image type, an interfacing object type (e.g., a button)), or a position of the content in a structure of the page.

When simultaneously displaying the first content of the first page and the second content of the second page on the display, the electronic device may obtain information about the first content of the first page and information about the second content of the second page. The electronic device may determine the similarity between the first content and the second content using the information about the first content and the information about the second content.

The structure of the page may refer to a hierarchy structure formed of contents included in the page. The structure of the page may include, for example, a tree structure and a list structure. The structure of the page may include a plurality of nodes, and each node may correspond to the content or a content group (e.g., hereinafter, also referred to as a "view group") having a plurality of contents. In various embodiments of the present disclosure, each content included in the page may be referred to as a "view", and the structure of the page may be referred to as a component tree, a view tree, or view hierarchy. The position of the content in the structure of the page may include, for example, a position of a node corresponding to the content or a position of a node corresponding to a content group (or a view group) including the content.

According to an embodiment, the electronic device may obtain information about the content (e.g., a user interface (UI) component) of the page using a UI developer tool (e.g., UIAutomator2 of Android).

The electronic device may determine the similarity at a content level based on the similarity between each content of the first page and each content of the second page. The similarity at the content level may include visual similarity between the contents. The visual similarity may include color similarity or a match between at least portions of visual appearances of the contents. The similarity at the content level may include functional similarity between the contents. For example, when the contents are interfacing objects or perform the same function (e.g., directing to another page) among interfacing objects, the functional similarity may be high.

Based on the position of each content in the first page and the position of each content in the second page, the electronic device may determine the similarity at a layout level indicating the similarity between positions of the contents in the pages. The similarity at the layout level may include the similarity between positions of the contents in the page structure. The similarity at the layout level may be determined between each content of the first page and each content of the second page.

The electronic device may determine the similarity between the first page and the second page, based on the determined similarity at the content level and the determined similarity at the layout level.

According to an embodiment, the electronic device may determine the similarity between the first page and the second page using a similarity determination model. The electronic device may determine a similarity score between the first page and the second page by applying the similarity determination model to input data.

The similarity determination model may refer to a model that is generated and/or trained to output output data including the similarity score between the first page and the second page as the similarity determination model is applied to the input data, based on the first page and the second page. According to an embodiment, the similarity determination model may be implemented based on a machine learning model, and may include, for example, a neural network (e.g., a convolutional neural network (CNN)).

The input data to the similarity determination model (hereinafter, also referred to as "input data") may be generated based on the first page and the second page. For example, the input data may be generated based on a first image based on the first page and a second page based on the second page. For example, the input data may include first partial input data including text extracted from the contents of the first page and second partial input data including text extracted from the contents of the second page. An image or a video (e.g., a plurality of image frames) included in the page may be converted into text through image captioning.

The input data according to an embodiment may include the information about the content.

According to an embodiment, the electronic device may determine the similarity between the first page and the second page, based on a first application that provides the first page and a second application that provides the second page.

For example, the electronic device may determine the similarity between the first page and the second page based on the first application being the same as the second application.

For example, the electronic device may determine the similarity between the first page and the second page based on the first application being the same type as the second application. The type of application may be classified based on a property of a service provided to a user via the application. The type of application may include, for example, at least one of a shopping type, a messaging type, a search type, a stock type, a banking type, a card type, a currency type, a video playback type, a webtoon type, or a map type. The electronic device may determine that the first page is similar to the second page based on the first page and the second page being provided via the same type of application. The type of application may be predetermined by information set to the application and/or may be determined to be a type selected by the user.

For example, the electronic device may determine the similarity between the first page and the second page based on the first application and the second application being mapped by the user. The first application and the second application may be mapped by the user.

For example, based on a user input, the electronic device may generate an application folder including two or more of applications installed in the electronic device. The electronic device may determine that the first page is similar to the second page based on the first application and the second application being included in one application folder.

For example, based on a user input, the electronic device may designate applications (e.g., two applications or three applications) as an application pair. When the electronic device obtains a user input with respect to the application pair, the electronic device may display the applications included in the application pair through respectively corresponding screens (e.g., at least a portion of a page). The electronic device may determine that the first page is similar to the second page based on the first application and the second application being designated as the same application pair.

In operation 220, the electronic device may enable concurrent scrolling between the first page and the second page based on the similarity between the first page and the second page.

According to an embodiment, the electronic device may enable concurrent scrolling based on the similarity score between the first page and the second page. For example, the electronic device may determine whether to enable concurrent scrolling by comparing the similarity score with a threshold similarity score.

According to an embodiment, the electronic device may enable concurrent scrolling based on the first page determined to be similar to the second page. For example, the electronic device may enable concurrent scrolling between the first page and the second page based on the first page and the second page being provided by the same application. For example, the electronic device may enable concurrent scrolling between the first page and the second page based on the first application being the same type as the second application. For example, the electronic device may enable concurrent scrolling between the first page and the second page based on the first application and the second application being mapped by the user.

In various embodiments of the present disclosure, enabling concurrent scrolling is not limited to the relationship between pages. For example, the electronic device may enable concurrent scrolling based on a user input.

According to an embodiment, the electronic device may enable concurrent scrolling based on a user input that indicates concurrent scrolling being enabled. For example, the electronic device may display a graphic object (hereinafter, also referred to as an "enable object") corresponding to enabling concurrent scrolling. The electronic device may enable concurrent scrolling based on obtaining the user input with respect to the enable object.

The electronic device may disable concurrent scrolling based on a user input that indicates concurrent scrolling being disabled. For example, the electronic device may display a graphic object (hereinafter, also referred to as a "disable object") corresponding to disabling concurrent scrolling. The electronic device may disable concurrent scrolling based on obtaining the user input with respect to the disable object.

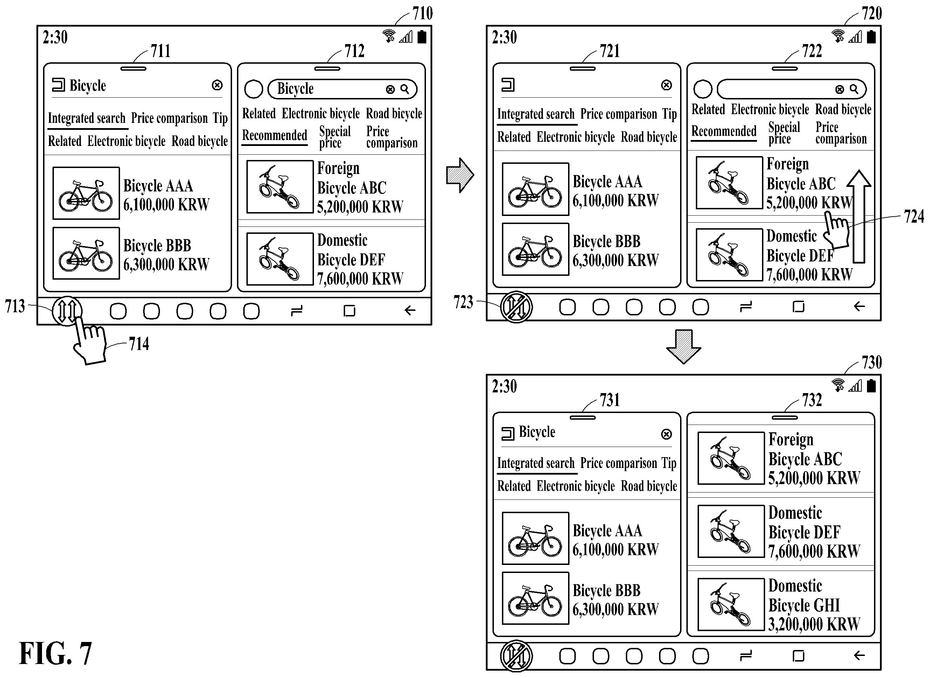

The enable object and the disable object may be implemented and/or displayed as one graphic object. The electronic device may switch between enabling and disabling concurrent scrolling based on the user input with respect to the graphic object. When the user desires concurrent scrolling between the first page and the second page, the electronic device according to an embodiment may determine whether to enable or disable concurrent scrolling according to a selection of the user. An embodiment of switching enabling and disabling of concurrent scrolling based on a user input with respect to a graphic object is further described with reference to FIG. 7.

According to an embodiment, the electronic device may enable concurrent scrolling based on the history of applying concurrent scrolling to pages. The history of applying concurrent scrolling may include a first record in which concurrent scrolling is applied to the first page and the second page and/or a second record in which application of concurrent scrolling to the first page and the second page is restricted. The history of applying concurrent scrolling may be comprehensively established user-wise, user group-wise (e.g., user groups specified by age, gender, and/or interests), and/or regardless of users (or user groups).

The first record and/or the second record may each include at least one of whether concurrent scrolling is applied, an ID (e.g., a uniform resource locator (URL) address) of the first page or the second page, information about an application that provides the first page or the second page, at least a portion of content included in the first page or the second page, input data or output data (e.g., the similarity score) of the similarity determination model based on the first page and the second page.

According to an embodiment, the first record and/or the second record may further include whether enabling concurrent scrolling, which is automatically determined, is switched by a user input.

For example, the electronic device may automatically (e.g., independently of the user input) enable or disable concurrent scrolling based on the similarity between the pages. Subsequently, when the user input is detected, the electronic device may manually (e.g., depending on the user input) switch whether to enable concurrent scrolling. The electronic device may disable concurrent scrolling based on the similarity between the pages, and subsequently, when concurrent scrolling is enabled according to the detected user input, may generate and/or store the first record. The electronic device may enable concurrent scrolling based on the similarity between the pages, and subsequently, when concurrent scrolling is disabled according to the detected user input, may generate and/or store the second record.

When the history includes a record in which concurrent scrolling between the first page and the second page is applied, the electronic device may enable concurrent scrolling between the first page and the second page. When the history includes a record in which application of concurrent scrolling between the first page and the second page is restricted, the electronic device may disable concurrent scrolling between the first page and the second page. When a plurality of records related to the first page and the second page is present, the electronic device may determine whether to enable concurrent scrolling based on some (e.g., the latest record) of the records or the majority of records in which concurrent scrolling is applied or records in which application of concurrent scrolling is restricted.

The electronic device may determine whether to enable concurrent scrolling using a similarity detection model that is trained based on the history. For example, based on the first record, training input data for training the similarity detection model and a ground truth similarity score may be determined. The ground truth similarity score may be determined to be a score exceeding a threshold similarity score. Based on the second record, the training input data for training the similarity detection model and the ground truth similarity score may be determined. The ground truth similarity score may be determined to be a score less than or equal to the threshold similarity score.

According to an embodiment, a first similarity determination model may be a model that is generated and/or is trained based on data of a plurality of users (e.g., all users). A second similarity determination model may be a model that is additionally trained (e.g., fine-tuned) from the first similarity determination model using the history of applying concurrent scrolling, wherein the history is collected from a specific user and/or a specific user group. Consequently, the second similarity determination model may be customized for the specific user and/or the specific user group. The electronic device may obtain the second similarity determination model from the first similarity determination model based on the history of applying concurrent scrolling and may enable concurrent scrolling between the first page and the second page using the second similarity determination model. However, the similarity determination model according to various embodiments of the present disclosure is not limited to being additionally trained based on the history of the specific user and/or the specific user group. The similarity determination model may be additionally trained regardless of the user and/or the user group.

In operation 230, based on obtaining a swipe input while concurrent scrolling is enabled, the electronic device may apply the obtained swipe input to the first page and the second page.

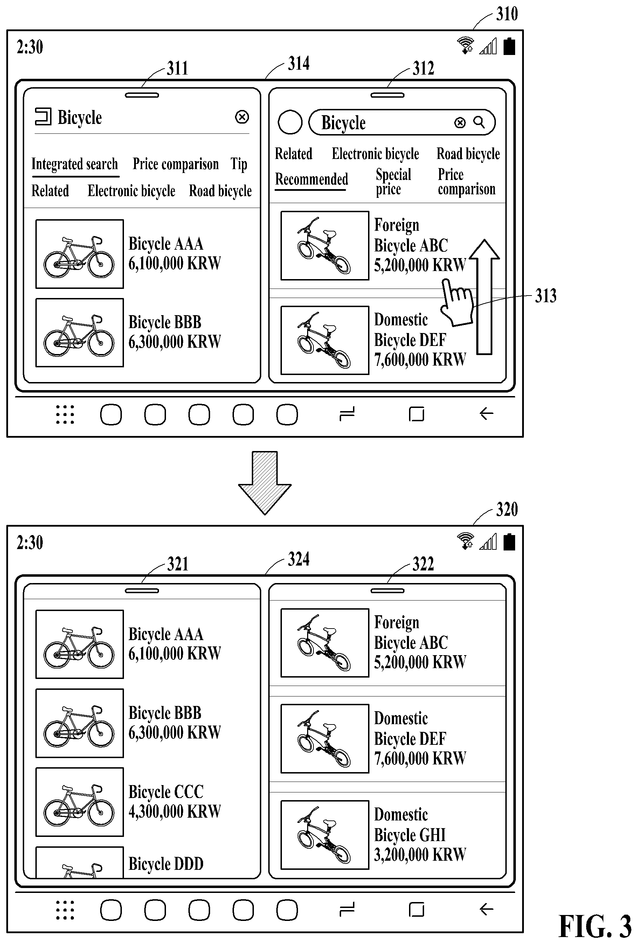

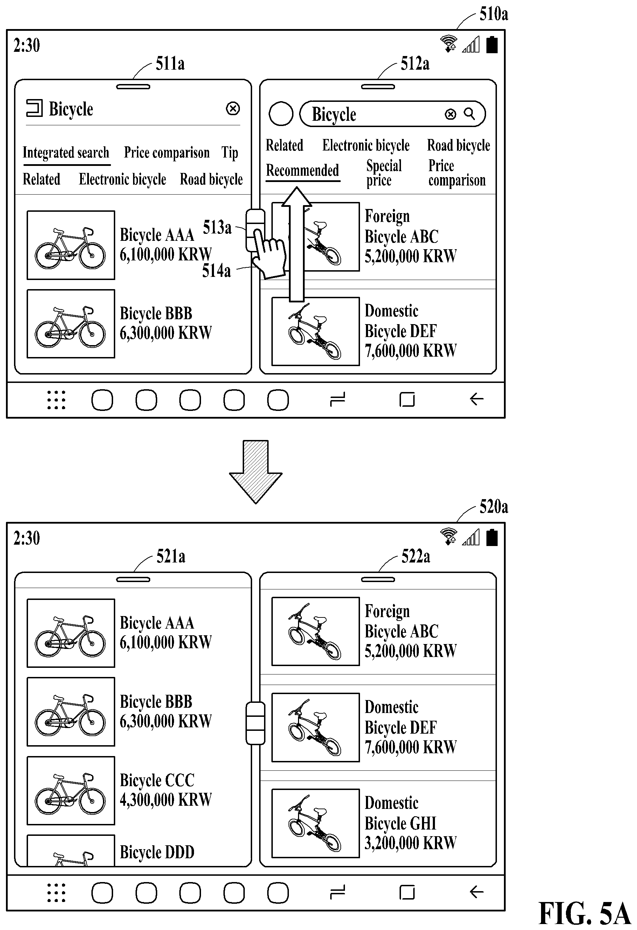

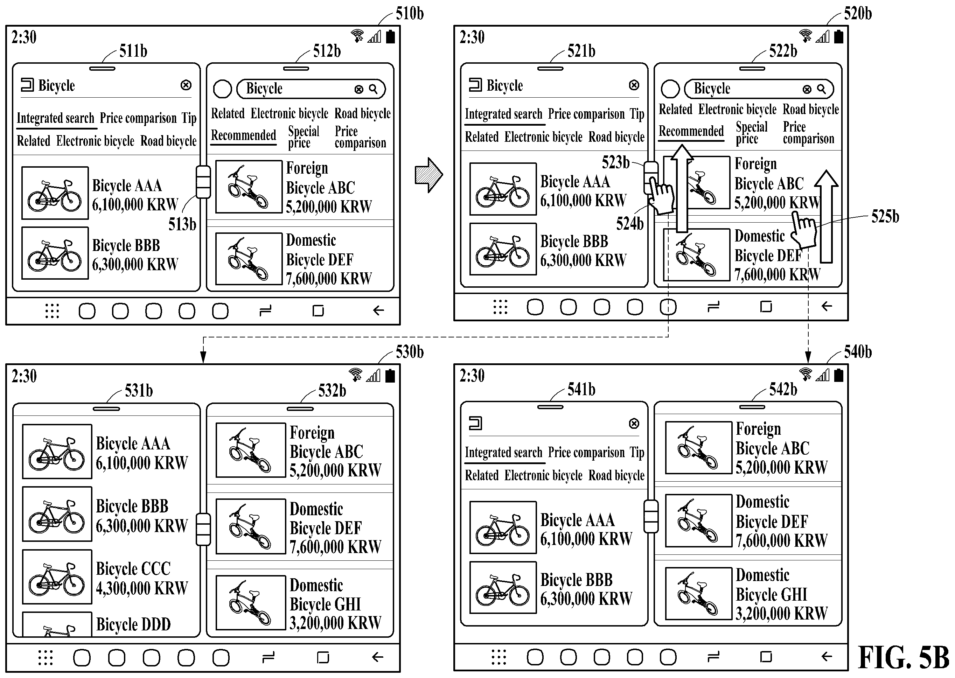

The swipe input may refer to an input for moving a display area of the page in a specific direction (e.g., a scroll direction) in the page. The swipe input may have a swipe direction and swipe velocity. According to an embodiment, the swipe input may be detected in an area corresponding to at least one of the first page and the second page. According to an embodiment, the swipe input may be detected in an area corresponding to a graphic object (e.g., a concurrent scrolling object) with respect to a plurality of pages (e.g., the first page and the second page). An example of an embodiment of a swipe input detected in an area corresponding to a page is further described with reference to FIG. 3, and an example of an embodiment of a swipe input detected in an area corresponding to a graphic object with respect to a plurality of pages is further described with reference to FIGS. 5A and 5B.

For example, when the electronic device detects a continuous user input from a first point to a second point of a display module (e.g., the display module 160 of FIG. 1), the electronic device may obtain a swipe input from the first point to the second point. The continuous user input from the first point to the second point may refer to that at the first point on the display, the display module and an object (e.g., a finger of the user or an electronic pen) are at least partially in contact with each other, and while the contact between the display module and the object is maintained, the object is moved from the first point on the display to the second point on the display. The swipe direction of the swipe input may be set to a direction from the second point to the first point, and the swipe velocity of the swipe input may be set based on a distance between the first point and the second point or the length of time in which the swipe input is obtained.

However, the swipe input is not limited to the continuous user input from the first point to the second point, and the swipe input may be obtained based on user control with respect to an input device (e.g., a mouse wheel) to obtain the swipe input.

Applying a swipe input to a page may refer to moving a display area displayed on the display in the page. For example, the scroll direction and scroll velocity may be determined based on the swipe input. The electronic device may determine the scroll direction based on the swipe direction of the swipe input. For example, the electronic device may determine the swipe direction to be the same direction as the swipe direction. For example, among a plurality of candidate scroll directions, the electronic device may determine the scroll direction to be a direction (e.g., a candidate scroll direction that forms a minimum angle with the swipe direction) that is most similar to the swipe direction. The electronic device may determine the scroll velocity based on the swipe velocity of the swipe input. For example, the electronic device may determine the scroll velocity to be a constant multiple (e.g., a value obtained by multiplying the swipe velocity by a predetermined constant) of the swipe velocity.

The electronic device may move the display area of the page in the scroll direction in the page. The electronic device may move the display area of the page in the page based on the scroll velocity. Moving the display area in the page is further described with reference to FIG. 4.

The electronic device may apply the swipe input to both the first page and the second page based on concurrent scrolling being enabled. The electronic device may move a display area of the first page in the scroll direction in the first page and may move a display area of the second page in the scroll direction in the second page.

According to an embodiment, the electronic device may identically apply the scroll velocity between the first page and the second page. For example, a distance between a first display area (e.g., a display area before the swipe input is applied) of the page and a second display area (e.g., a display area after the swipe input is applied) of the page may be the same between the first page and the second page. The distance between the display areas may be determined between a distance between reference points (e.g., center points of the display areas) of the display areas.

According to an embodiment, the electronic device may apply the scroll velocity based on the similarity between the content of the first page and the content of the second page. For example, based on concurrent scrolling being enabled, the electronic device may move the first display area of the first page displayed on the display according to the swipe input. The electronic device may display first content included in the first display area moved on a window corresponding to the first page. The first content according to an embodiment may refer to at least a portion of contents included in the first display area.

The electronic device may determine second content corresponding to the first content based on the similarity at the content level and the similarity at the layout level. The electronic device may move the second display area of the second page displayed on the display to include the second content therein. The electronic device may display the second content of the second page on a window corresponding to the second page. The electronic device may control the scroll velocity to move the second display area such that the second display area includes the second content.

According to an embodiment, when the first content is displayed at a first position of the window corresponding to the first page, the electronic device may determine a second position corresponding to the first position in an area corresponding to the window corresponding to the second page and may display the second content at the determined second position. The first position and the second position may be positions having the same heights on corresponding windows.

The second content according to an embodiment may refer to, among the contents included in the second page, selected content corresponding to the first content based on the similarity at the content level and the similarity at the layout level. According to an embodiment, as described above in operation 230, the electronic device may determine content level similarity and layout level similarity between the first content and the second content based on information about the contents. The electronic device may determine correspondence between at least a portion of the contents included in the first page and at least a portion of the contents included in the second page, based on at least one of structures of the first page and the second page, the content level similarity between the contents, and the layout level similarity between the contents.

For example, when the electronic device detects a swipe input only in the area (e.g., the window corresponding to the first page) corresponding to the first page, the electronic device may also apply the swipe input to the second page. When the electronic device does not directly detect a swipe input with respect to the second page (e.g., does not detect a swipe input in the area corresponding to the second page), the electronic device may detect the swipe input with respect to the first page and when concurrent scrolling between the first page and the second page is enabled, may also apply the swipe input to the second page.

Based on concurrent scrolling being disabled, the electronic device may apply the obtained swipe input to the first page and may restrict application of the swipe input to the second page. For example, the electronic device may move the display area of the first page in the first page and may maintain (e.g., not change) the display area of the second page.

FIG. 3 is a diagram illustrating an example of an operation of applying concurrent scrolling to a plurality of pages by an electronic device according to various embodiments.

According to an embodiment, on a screen 310, an electronic device (e.g., the electronic device 101 of FIG. 1) may display a display area of a first page and a display area of a second page on a first window 311 and a second window 312, respectively.

The electronic device may obtain a swipe input 313 in an area corresponding to the second window 312. The electronic device may determine whether to enable concurrent scrolling between the first page and the second page. For example, the electronic device may enable concurrent scrolling based on the similarity between the content of the first page and the content of the second page. Obtaining the swipe input 313 and enabling concurrent scrolling may be performed at independent time points. For example, after the swipe input 313 is obtained, concurrent scrolling may be enabled or disabled, and/or after concurrent scrolling is enabled or disabled, the swipe input 313 may be obtained.

Based on concurrent scrolling being enabled, the electronic device may display a graphic object indicating that concurrent scrolling is enabled. The graphic object indicating that concurrent scrolling is enabled may include, for example, a box that bounds windows. In FIG. 3, for example, on the screen 310, based on concurrent scrolling between the first window 311 and the second window 312 being enabled, the electronic device may display a graphic object 314 surrounding the first window 311 and the second window 312. Although not explicitly illustrated in FIG. 3, based on concurrent scrolling between the first window 311 and the second window 312 being disabled, the electronic device may restrict displaying the graphic object 314.

The electronic device may apply the swipe input to both the first page and the second page. On a screen 320, the electronic device may move a display area of the first page displayed on a first window 321 within the first page based on the scroll direction of the swipe input 313. On the screen 320, the electronic device may move a display area of the second page displayed on a second window 322 within the second page based on the scroll direction of the swipe input 313. For example, as illustrated in FIG. 3, based on concurrent scrolling between the first page and the second page being enabled, the electronic device may display a graphic object 324.

FIG. 4 is a diagram illustrating an example of a page, a plurality of contents, and a display area according to various embodiments.

An electronic device (e.g., the electronic device 101 of FIG. 1) according to an embodiment may display at least a portion of a page 410 on a display (e.g., the display module 160 of FIG. 1).

The page 410 according to an embodiment may include a plurality of contents. Each content included in the page 410 may be disposed on at least a partial area of the page 410. For example, in FIG. 4, the page 410 may include first content 411-1, second content 411-2, third content 411-3, fourth content 411-4, fifth content 411-5, sixth content 411-6, seventh content 411-7, eighth content 411-8, ninth content 411-9, and tenth content 411-10. Each content in the page 410 may be arranged as illustrated in FIG. 4. The first content 411-1, the third content 411-3, the fourth content 411-4, the eighth content 411-8, and the ninth content 411-9 may include text. The second content 411-2, the sixth content 411-6, and the seventh content 411-7 may include an image. The fifth content 411-5 and the tenth content 411-10 may include a video.

For example, in FIG. 4, on a screen 401, the electronic device may display a first display area 420 of the page 410. The first display area 420 may include the second content 411-2, the third content 411-3, the fourth content 411-4, the fifth content 411-5, the sixth content 411-6, and the seventh content 411-7. The first display area 420 may not include the first content 411-1, the eighth content 411-8, the ninth content 411-9, and the tenth content 411-10 among the contents included in the page 410.

The electronic device may obtain a swipe input 414 with respect to the page 410 while displaying the first display area 420 of the page 410. The swipe input 414 may have a scroll direction (e.g., a direction from top to bottom of the electronic device illustrated in FIG. 4). The electronic device may move the display area in the page 410 based on obtaining the swipe input 414. For example, the electronic device may change the display area from the first display area 420 to a second display area 430 in the page 410.

The electronic device may display the first display area 420 of the page 410 on a screen 402. The second display area 430 may include the third content 411-3, the fourth content 411-4, the fifth content 411-5, the sixth content 411-6, the seventh content 411-7, and the eighth content 411-8. The first display area 420 may not include the first content 411-1, the second content 411-2, the ninth content 411-9, and the tenth content 411-10 among the contents included in the page 410.

FIG. 5A is a diagram illustrating an example of an operation of applying concurrent scrolling to a plurality of pages using a concurrent scrolling object by an electronic device according to various embodiments.

According to an embodiment, an electronic device (e.g., the electronic device 101 of FIG. 1) may display a concurrent scrolling object 513a based on displaying at least a portion of a first page and at least a portion of a second page. Based on obtaining a swipe input 514a via the concurrent scrolling object 513a, the electronic device may apply the obtained swipe input 514a to the first page and the second page.

The electronic device according to an embodiment may apply the swipe input 514a obtained via the concurrent scrolling object 513a to both the first page and the second page regardless of concurrent scrolling between the first page and the second page being enabled or disabled based on at least one of a user input that indicates whether to enable concurrent scrolling or history of applying concurrent scrolling.

For example, when the electronic device disables concurrent scrolling based on the similarity between the first page and the second page, the electronic device may apply the swipe input 514a to both the first page and the second page based on obtaining the swipe input 514a via the concurrent scrolling object 513a. For example, when the electronic device disables concurrent scrolling based on a user input indicating concurrent scrolling being disabled, the electronic device may apply the swipe input 514a to both the first page and the second page based on obtaining the swipe input 514a via the concurrent scrolling object 513a.

As illustrated in FIG. 5A, on a screen 510a, the electronic device may display a display area of the first page and a display area of the second page on a first window 511a and a second window 512a, respectively. The electronic device may display the concurrent scrolling object 513a. For example, the electronic device may display the concurrent scrolling object 513a on an area adjacent to or overlapping both the first window 511a and the second window 512a. However, the concurrent scrolling object 513a is not limited to being displayed in an area adjacent to or overlapping both the first window 511a and the second window 512a. The concurrent scrolling object 513a may be displayed at a position spaced apart from at least one of the first window 511a and the second window 512a.

The electronic device may obtain the swipe input 514a via the concurrent scrolling object 513a on the screen 510a. The electronic device may apply the swipe input 514a to the first page and the second page based on the swipe input 514a obtained via the concurrent scrolling object 513a. On the screen 520a, the electronic device may move the display area of the first page that is displayed on the first window 521a in the first page based on the scroll direction of the swipe input 514a. On the screen 520a, the electronic device may move the display area of the second page that is displayed on the second window 522a in the second page based on the scroll direction of the swipe input 514a.

Although FIG. 5A mainly describes that the electronic device displays the concurrent scrolling object 513a based on displaying at least a portion of the first page and at least a portion of the second page, the example is not limited thereto. The electronic device according to an embodiment may display the concurrent scrolling object 513a based on concurrent scrolling between the first page and the second page being enabled. Displaying the concurrent scrolling object 513a based on concurrent scrolling being enabled is further described with reference to FIG. 5B.

FIG. 5B is a diagram illustrating an example of an operation, by an electronic device, of applying concurrent scrolling to a plurality of pages using a displayed concurrent scrolling object when concurrent scrolling is enabled according to various embodiments.

On a screen 510b, an electronic device according to an embodiment may display a split screen object 513b based on displaying at least a portion of a first page and at least a portion of a second page. The split screen object 513b may include a graphic object related to performing, by the electronic device, a function (e.g., a function to swap windows corresponding to a plurality of pages, a function to switch between vertical arrangement and horizontal arrangement, and a function to register to an application pair) with respect to a plurality of windows on a split screen to simultaneously display portions of the plurality of pages through the plurality of windows. The electronic device may provide a function for the plurality of windows based on detecting a user input with respect to the split screen object 513b.

When at least a portion of the first page and at least a portion of the second page are displayed, the electronic device according to an embodiment may display one of the split screen object 513b and a concurrent scrolling object 523b based on whether concurrent scrolling between the first page and the second page is enabled. The electronic device may set a position of the split screen object 513b displayed and/or the size of the split screen object 513b when concurrent scrolling is disabled to be the same as a position of the concurrent scrolling object 523b displayed and/or the size of the concurrent scrolling object 523b when concurrent scrolling is enabled.

For example, on the screen 510b, the electronic device may display the split screen object 513b based on concurrent scrolling between the first page and the second page being disabled. While displaying the split screen object 513b, based on detecting the swipe input with respect to the first page, the electronic device may apply the swipe input to the first page and may restrict application of the swipe input to the second page. Similarly, while displaying the split screen object 513b, based on detecting the swipe input with respect to the second page, the electronic device may apply the swipe input to the second page and may restrict application of the swipe input to the first page.

On a screen 520b, the electronic device according to an embodiment may display the concurrent scrolling object 523b based on concurrent scrolling between the first page and the second page being enabled. The electronic device may display the concurrent scrolling object 523b based on concurrent scrolling being enabled and while displaying the concurrent scrolling object 523b, the electronic device may apply a swipe input 524b to the first page and the second page based on obtaining the swipe input 524b via the concurrent scrolling object 523b.

On the screen 530b, the electronic device may move the display area of the first page that is displayed on a first window 531b in the first page based on the scroll direction of the swipe input 524b. On the screen 530b, the electronic device may move the display area of the second page that is displayed on a second window 532b in the second page based on the scroll direction of the swipe input 524b.

While displaying the concurrent scrolling object 523b, on the screen 520b, the electronic device may obtain a swipe input in an area corresponding to a window (e.g., the first window 521b and the second window 522b) independently of the concurrent scrolling object 523b. For example, on the screen 520b, a swipe input 525b may be obtained in an area corresponding to the second window 522b. Based on obtaining the swipe input 525b that is independent of the concurrent scrolling object 523b while displaying the concurrent scrolling object 523b, the electronic device may apply the swipe input to the second page and may restrict application of the swipe input to the first page. The electronic device may move the display area of the second page in the scroll direction that is determined based on the swipe input 525b and may restrict (e.g., maintain the display area) moving the display area of the first page.

On a screen 540b, the electronic device may maintain the display area of the first page displayed on a first window 541b. The electronic device may move the display area of the second page displayed on a second window 542b in the scroll direction. As a result, the display area of the first page may be unchanged, and the display area of the second page may be changed.

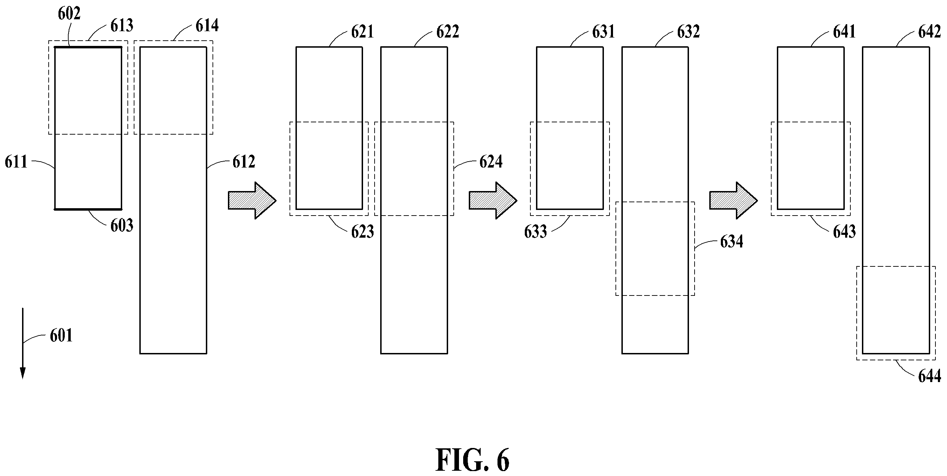

FIG. 6 is a diagram illustrating an example of an operation of applying concurrent scrolling to a plurality of pages having different lengths by an electronic device according to various embodiments.

An electronic device (e.g., the electronic device 101 of FIG. 1) according to an embodiment may move an area displayed on a display in a first page and a second page in a scroll direction of a swipe input. For example, the electronic device may move a display area of the first page in the first page in the scroll direction. The electronic device may move a display area of the second page in the second page in the scroll direction.

In FIG. 6, the electronic device may display a first page 611 and a second page 612. The electronic device may display a display area 613 of the first page 611 and may display a display area 614 of the second page 612.

The electronic device may obtain a swipe input with respect to at least one of the first page 611 or the second page 612. The electronic device may apply the swipe input to both the first page 611 and the second page 612. The scroll direction of the swipe input may be, for example, a direction from top to bottom in FIG. 6.

The electronic device may move an area of a first page 621 displayed on the display from the display area 613 to a display area 623. The electronic device may move an area of a second page 622 displayed on the display from the display area 614 to a display area 624.

According to an embodiment, based on an area displayed on one of the first page or the second page reaching an end of the page, the electronic device may stop moving the area displayed on the page. Based on an area displayed on the other of the first page or the second page not reaching an end of the page, the electronic device may move the area displayed on the other page in the scroll direction.

The area displayed on the page reaching the end of the page may indicate that from the area (e.g., the display area) displayed on the page, another area arranged in the scroll direction is not present in the page.

For example, the electronic device may obtain a swipe input in a longitudinal direction 601 of the page or an opposite direction of the longitudinal direction 601 of the page. For example, in the first page 611 of FIG. 6, the longitudinal direction 601 of the page may be defined as a direction from top to bottom. When the page has a rectangular shape, among four sides of the page, a first side 602 and a second side 603 that are perpendicular to the longitudinal direction 601 of the page may be defined as ends of the page. In FIG. 6, for example, between the first side 602 and the second side 603, an upper side may be referred to as the first side 602, and a lower side may be referred to as the second side 603.

When the display area is adjacent to the second side 603 and the scroll direction is the longitudinal direction 601 of the page, the display area may be determined to have reached the end of the page. When the display area is spaced apart from the second side 603 and the scroll direction is the longitudinal direction 601 of the page, the display area may be determined not to have reached the end of the page. When the display area is adjacent to the first side 602 and the scroll direction is the opposite direction of the longitudinal direction 601 of the page, the display area may be determined to have reached the end of the page. When the display area is spaced apart from the first side 602 and the scroll direction is the opposite direction of the longitudinal direction 601 of the page, the display area may be determined not to have reached the end of the page.

Referring to FIG. 6, the electronic device may obtain a swipe input with respect to at least one of the first page 621 or the second page 622. The electronic device may apply the swipe input to the first page 621 and the second page 622 according to concurrent scrolling being enabled. The swipe input may have the longitudinal direction 601 of the page as the scroll direction. The electronic device may stop moving the display area 623 of the first page 621 based on the display area 623 of the first page 621 reaching the end of the first page 621. For example, the electronic device may maintain an area of a first page 631 that is displayed to the display area 623 or a display area 633. Based on a display area 624 of the second page 622 not reaching the end of the second page 622, the electronic device may move an area of a second page 632 that is displayed from the display area 624 to a display area 634.

When a swipe input with respect to the first page 621 is obtained, the electronic device may restrict moving the display area 623 of the first page based on the display area 623 of the first page 621 reaching the end of the first page 621.

The electronic device may obtain a swipe input with respect to at least one of the first page 631 or the second page 632. The swipe input may have the longitudinal direction 601 of the page as the scroll direction. Based on the display area 633 of the first page 631 reaching the end of the first page 631, the electronic device may maintain an area of a first page 641 displayed on the display to the display area 633 or a display area 643. Based on the display area 634 of the second page 632 not reaching the end of the second page 632, the electronic device may move an area of a second page 642 that is displayed from the display area 634 to a display area 644.

The electronic device may obtain a swipe input with respect to at least one of the first page 641 or the second page 642. The swipe input may have the longitudinal direction 601 of the page as the scroll direction. Based on the display area 643 of the first page 641 reaching the end of the first page 641 and the display area 644 of the second page 642 reaching the display area of the second page 642, the electronic device may stop (e.g., restrict) moving the display areas of the first page 641 and the second page 642.

FIG. 7 is a diagram illustrating an example of an operation, by an electronic device, of switching between enable and disable via a graphic object indicating whether concurrent scrolling is enabled according to various embodiments.

An electronic device (e.g., the electronic device 101 of FIG. 1) according to an embodiment may display a graphic object indicating whether concurrent scrolling is enabled on a display (e.g., the display module 160 of FIG. 1). When concurrent scrolling is enabled, the graphic object may be displayed as a first graphic representation 713, and when concurrent scrolling is disabled, the graphic object may be displayed as a second graphic representation 723.

Based on detecting a user input 714 with respect to the graphic object, the electronic device may switch concurrent scrolling between enabled and disabled. For example, when concurrent scrolling is enabled, the electronic device may disable concurrent scrolling based on the user input 714 with respect to the graphic object. The electronic device may display the graphic object by changing the graphic object from the first graphic representation 713 to the second graphic representation 723. When concurrent scrolling is disabled, the electronic device may enable concurrent scrolling based on the user input with respect to the graphic object. The electronic device may display the graphic object by changing the graphic object from the second graphic representation 723 to the first graphic representation 713.

Referring to FIG. 7, according to an embodiment, on a screen 710, an electronic device may display a display area of a first page and a display area of a second page on a first window 711 and a second window 712, respectively. On the screen 710, the electronic device may display a graphic object indicating whether concurrent scrolling between the first page and the second page is enabled. In FIG. 7, concurrent scrolling between the first page and the second page may be enabled. The electronic device may display the graphic object indicating concurrent scrolling being enabled as the first graphic representation 713. On the screen 710, the electronic device may detect the user input 714 with respect to the graphic object.

On a screen 720, the electronic device may switch concurrent scrolling from enabled to disabled based on the user input 714. The electronic device may display the graphic object by changing the graphic object to the second graphic representation 723. On the screen 720, the electronic device may obtain a swipe input 724 with respect to the second page in an area corresponding to a second window 722. Based on concurrent scrolling being disabled, the electronic device may apply the swipe input to the second page and may restrict application of the swipe input to the first page. The electronic device may move the display area of the second page in a scroll direction that is determined based on the swipe input and may restrict (e.g., maintain the display area) moving the display area of the first page.

On a screen 730, the electronic device may maintain the display area of the first page displayed on a first window 731. The electronic device may move the display area of the second page displayed on a second window 732 in the scroll direction. As a result, the display area of the first page may be unchanged, and the display area of the second page may be changed.

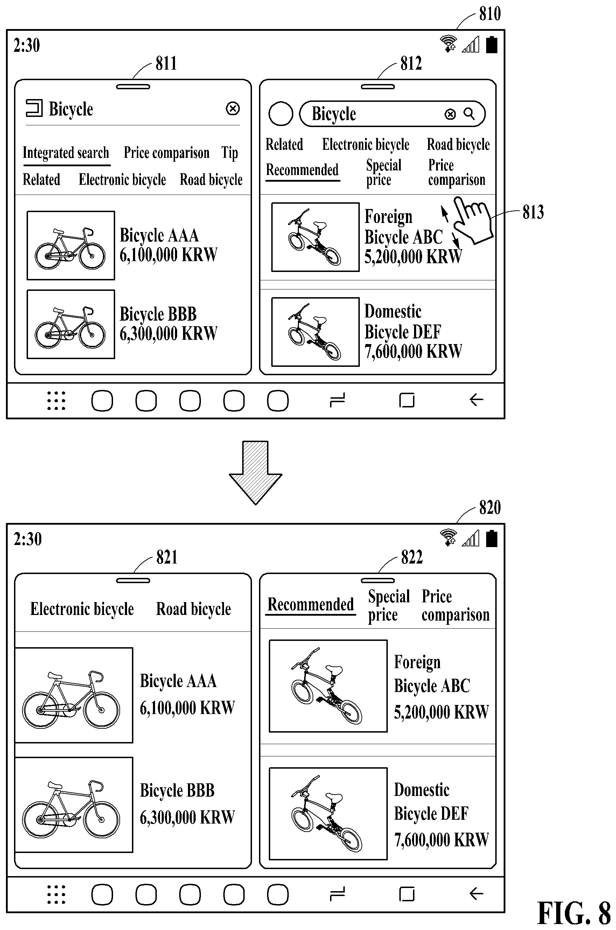

FIG. 8 is a diagram illustrating an example of an operation of applying a magnification adjustment input to a plurality of pages by an electronic device according to various embodiments.

An electronic device (e.g., the electronic device 101 of FIG. 1) according to an embodiment may apply a magnification adjustment input 813 to at least one of a plurality of pages for a user while displaying the plurality of pages.

The electronic device may obtain a magnification adjustment input 813 indicating zoom in or zoom out with respect to at least one of a first page and a second page.

The magnification adjustment input 813 may refer to an input for adjusting magnification applied to display a page on a display. The magnification adjustment input 813 may have a reference point, an adjustment direction (e.g., increase or decrease), or an adjustment amount.

Based on a similarity between the first page and the second page, the electronic device may enable concurrent magnification adjustment between the first page and the second page. As described above with reference to FIG. 2, the similarity between pages may include at least one of a similarity between contents included in the pages, a similarity between layouts of the contents, or a similarity between applications that provide the pages.

The electronic device may enable concurrent magnification adjustment similar to the operation related to enabling concurrent scrolling. For example, the electronic device may enable concurrent magnification adjustment based on the similarity between the first page and the second page. The electronic device may determine the similarity between the first page and the second page using a similarity determination model. For example, the electronic device may enable concurrent magnification adjustment, based on a first application for providing the first page and a second application for providing the second page. For example, the electronic device may enable or disable concurrent scrolling based on a user input indicating enabling or disabling concurrent magnification adjustment.

Based on concurrent magnification adjustment being enabled, the electronic device may apply an obtained magnification adjustment input 813 to the first page and the second page.

Applying the magnification adjustment input 813 to the page may refer to changing the magnification at which the page is displayed. Based on (e.g., centered) the reference point of the magnification adjustment input 813, the magnification at which the page is displayed may be adjusted according to the adjustment direction (e.g., increase or decrease).

Based on concurrent magnification adjustment being disabled, the electronic device may apply the obtained magnification adjustment input 813 to at least one page and may restrict application of the obtained magnification adjustment input 813 to pages other than the at least one page. For example, the electronic device may obtain the magnification adjustment input 813 with respect to one of the first page or the second page. The electronic device may apply the magnification adjustment input 813 to one of the first page or the second page. Based on concurrent magnification adjustment being disabled, the electronic device may restrict applying the magnification adjustment input 813 to the other of the first page or the second page.

Referring to FIG. 8, on a screen 810, the electronic device may display a display area of the first page and a display area of the second page on a first window 811 and a second window 812, respectively.

On the screen 810, the electronic device may obtain the magnification adjustment input 813 in an area corresponding to the second window 812. For example, the magnification adjustment input 813 may indicate zoom in. The electronic device may determine whether to enable concurrent magnification adjustment between the first page and the second page. For example, the electronic device may enable concurrent magnification adjustment based on the similarity between content of the first page and content of the second page. Obtaining the magnification adjustment input 813 and enabling concurrent magnification adjustment may be performed at independent time points. For example, after the magnification adjustment input 813 is obtained, concurrent magnification adjustment may be enabled or disabled, and/or after concurrent magnification adjustment is enabled or disabled, the magnification adjustment input 813 may be obtained.

The electronic device may apply the magnification adjustment input to both the first page and the second page. On a screen 820, based on the magnification adjustment input 813, the electronic device may change magnification of the first page displayed on a first window 821 and magnification of the second page displayed on a second window 822. For example, the electronic device may display the first page on the screen 820 at a higher magnification than on the screen 810 and may display the second page on the screen 820 at a higher magnification than on the screen 810.

The electronic device according to various embodiments described herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "first," "second," "first," or "second" may be used simply to distinguish one component from another and may not limit the components with respect to other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), it means that the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. A machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, an FPGA, a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, or computer storage medium or device capable of providing instructions or data to or being interpreted by the processing device. The software may also be distributed over network-coupled computer systems so that the software is stored and executed in a distributed fashion. The software and data may be stored by one or more non-transitory computer-readable recording media.

The method according to the embodiments described above may be recorded in non-transitory computer-readable storage media including program instructions to implement various operations of the embodiments described above. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape, optical media such as compact disc read-only memory (CD-ROM) discs and digital video discs (DVDs), magneto-optical media such as floptical disks, and hardware devices that are specifically configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

## Claims

1. An electronic device (101) comprising:
a display (160);
a processor (120); and
a memory (130) storing instructions,
wherein the instructions, when executed by the processor (120), cause the electronic device (101) to:
while displaying at least a portion of a first page and at least a portion of a second page on respectively corresponding windows on the display (160), determine a similarity between the first page and the second page, based on the similarity between the first page and the second page, enable concurrent scrolling between the first page and the second page, and
while the concurrent scrolling is enabled, based on obtaining a swipe input (313; 414; 514; 724), apply the obtained swipe input (313; 414; 514; 724) to the first page and the second page.

2. The electronic device (101) of claim 1,
wherein the instructions, when executed by the processor (120), cause the electronic device (101) to:
obtain information about contents arranged in the first page and information about contents arranged in the second page,
based on a similarity between each content of the first page and each content of the second page, determine a similarity at a content level including a visual similarity between contents,
based on a position of each content in the first page and a position of each content in the second page, determine a similarity at a layout level indicating a similarity between the positions of the contents in a page, and
based on the determined similarity at the content level and the determined similarity at the layout level, determine the similarity between the first page and the second page.

3. The electronic device (101) of one of claims 1 to 2,
wherein the instructions, when executed by the processor (120), cause the electronic device (101) to:
based on the concurrent scrolling being enabled, move a first display area of the first page displayed on the display according to the swipe input,
display first content included in the moved first display area on a window corresponding to the first page,
determine second content corresponding to the first content, based on a similarity at a content level and a similarity at a layout level,
move a second display area of the second page displayed on the display such that the second content is included in the second display area, and display the second content of the second page on a window corresponding to the second page.

4. The electronic device (101) of one of claims 1 to 3,
wherein the instructions, when executed by the processor (120), cause the electronic device (101) to:
enable the concurrent scrolling based on a user input indicating the concurrent scrolling being enabled.

5. The electronic device (101) of one of claims 1 to 4,
wherein the instructions, when executed by the processor (120), cause the electronic device (101) to:
enable the concurrent scrolling, based on a first application that provides the first page and a second application that provides the second page.

6. The electronic device (101) of one of claims 1 to 5,
wherein the instructions, when executed by the processor (120), cause the electronic device (101) to:
based on display at least a portion of the first page and at least a portion of the second page, display a concurrent scrolling object (513), and
based on obtaining the swipe input (313; 414; 514; 724) via the concurrent scrolling object (513), apply the obtained swipe input (313; 414; 514; 724) to the first page and the second page.

7. The electronic device (101) of one of claims 1 to 6,
wherein the instructions, when executed by the processor (120), cause the electronic device (101) to:
move an area displayed on the display (160) in a scroll direction that is determined based on the swipe input (313; 414; 514; 724) within the first page and the second page,
based on an area, which is displayed on one of the first page or the second page, reaching an end of the page, stop moving the area displayed on the one page, and
based on an area, which is displayed on another one of the first page or the second page, not reaching an end of the other page, move the area displayed in the other page in the scroll direction.

8. The electronic device (101) of one of claims 1 to 7,
wherein the instructions, when executed by the processor (120), cause the electronic device (101) to:
on the display (160), display a graphic object indicating whether the concurrent scrolling is enabled, and
based on detecting a user input with respect to the graphic object, switch between enabling and disabling the concurrent scrolling.

9. The electronic device (101) of one of claims 1 to 8,
wherein the instructions, when executed by the processor (120), cause the electronic device (101) to:
enable the concurrent scrolling based on a history of applying concurrent scrolling between pages.

10. The electronic device (101) of one of claims 1 to 9,
wherein the instructions, when executed by the processor (120), cause the electronic device (101) to:
obtain a magnification adjustment input (813) indicating zoom in or zoom out with respect to at least one of the first page and the second page, and
based on the similarity between the first page and the second page, enable concurrent magnification adjustment between the first page and the second page.

11. A method performed by an electronic device (101), the method
comprising:
while displaying at least a portion of a first page and at least a portion of a second page on respectively corresponding windows on a display (160),
determining a similarity between the first page and the second page; based on the similarity between the first page and the second page, enabling concurrent scrolling between the first page and the second page; and
while the concurrent scrolling is enabled, based on obtaining a swipe input (313; 414; 514; 724), applying the obtained swipe input (313; 414; 514; 724) to the first page and the second page.

12. The method of claim 11,
wherein the enabling of the concurrent scrolling comprises:
obtaining information about contents arranged in the first page and information about contents arranged in the second page;
based on a similarity between each content of the first page and each content of the second page, determining a similarity at a content level including a visual similarity between contents;
based on a position of each content in the first page and a position of each content in the second page, determining a similarity at a layout level indicating a similarity between the positions of the contents in a page; and
based on the determined similarity at the content level and the determined similarity at the layout level, determining the similarity between the first page and the second page.

13. The method of one of claims 11 to 12,
wherein the applying of the obtained swipe input (313; 414; 514; 724) to the first page and the second page comprises:
based on the concurrent scrolling being enabled, moving a first display area of the first page displayed on the display according to the swipe input; displaying first content included in the moved first display area on a window corresponding to the first page;
determining second content corresponding to the first content, based on a similarity at a content level and a similarity at a layout level;
moving a second display area of the second page displayed on the display such that the second content is included in the second display area; and
displaying the second content of the second page on a window corresponding to the second page.

14. The method of one of claims 11 to 13,
wherein the enabling of the concurrent scrolling comprises:
enabling the concurrent scrolling based on a user input indicating the concurrent scrolling being enabled.

15. A non-transitory computer-readable storage medium storing instructions that, when executed by a processor, cause the processor to perform the method of one of claims 11 to 14.
